# EUROPEAN PATENT SPECIFICATION

(11) **EP 1 014 161 B1**
(45) Date of publication and mention of the grant of the patent: **19.12.2001**
(21) Application number: 99926792.5
(22) Date of filing: 24.06.1999
(51) Int. Cl.: G02F 1/1335

(54) **REFLECTIVE LIQUID CRYSTAL DISPLAY**
REFLEKTIERENDE FLÜSSIGKRISTALLANZEIGE
AFFICHAGE A CRISTAUX LIQUIDES REFLECHISSANT

(30) Priority: 25.06.1998 JP 17851098
(43) Date of publication of application: 28.06.2000
(73) Proprietor: Citizen Watch Co. Ltd., Tokyo 188-8511 (JP)
(72) Inventor: KANEKO, Yasushi Citizen Watch Co., Ltd., Tokorozawa-shi, Saitama 359-8511 (JP); IMAZU, Kenzi Citizen Watch Co., Ltd., Tokorozawa-shi, Saitama 359-8511 (JP); KANEDA, Yoshihiro Citizen Watch Co., Ltd., Tanashi-shi Tokyo 188-8511 (JP)
(74) Representative: Prüfer, Lutz H., Dipl.-Phys.
(86) International application number: JP9903373
(87) International publication number: WO9967680

(56) References cited:
- EP-A- 0 996 027
- JP-A- 2 020 824
- JP-A- 5 066 399
- JP-A- 6 138 436
- JP-A- 10 003 078
- US-A- 5 561 539

## Description

### TECHNICAL FIELD

The present invention relates to a reflection-type liquid crystal display device, more specifically, to a reflection-type color liquid crystal display device containing a color filter therein, capable of a multicolor display.

### BACKGROUND TECHNOLOGY

A reflection-type liquid crystal display device for performing a monochrome display using a TN (twisted nematic) liquid crystal cell or an STN (super twisted nematic) liquid crystal cell, is mainly used as a conventional reflection-type liquid crystal display device. However, in recent years, there has been a growing demand to display colors, and reflection-type color liquid crystal display devices containing color filters therein have been vigorously developed.

The reflection-type liquid crystal display devices containing color filters therein are broadly classified into the following three examples.

The first conventional example uses a liquid crystal mode without a polarizing film. There is a guest-host LCD in which a black dye is mixed in a liquid crystal material, a polymer-dispersion LCD in which a liquid crystal material is dispersed in a polymer and so on. Since none of them uses a polarizing film, they have excellent brightness but low in contrast, thus they have not been realized for practical use yet.

The conventional example using a guest-host LCD is disclosed in, for example, Japan Patent Laid-open No. Shou 59-198489. The conventional example using a polymer-dispersion LCD is disclosed in, for example, Japan Patent Laid-open No. Hei 5-241143.

The second conventional example is a reflection-type liquid crystal display device using one polarizing film and containing a reflector inside the liquid crystal display device. Moreover, this example is divided into two types. One type uses a self-contained reflector with a mirror surface which has a diffusing layer provided on the surface thereof, and the other uses a reflector with scattering properties. Since both types use only one polarizing film, they have also excellent brightness but low contrast.

In the type using a self-contained reflector with a mirror surface, though it is bright in a direction of regular reflection of incident light, it becomes abruptly dark at other angles, that is, the viewing angle characteristic thereof is quite poor. In the other type using a reflector with scattering properties, it is difficult to control the scattering properties and the fabricating process becomes complicated. The conventional example of the reflection-type liquid crystal display device using one polarizing film is disclosed in, for example, Japan Patent Laid-open No. Hei 3-223715.

The third conventional example is a liquid crystal display device using two polarizing films with a color filter provided in a typical monochrome liquid crystal display device. Since this example uses two polarizing films, it is excellent in contrast, but it has the disadvantage of a dark display. However, a reflection-type polarizing film is used for a lower polarizing film, thereby improving brightness, and this reflection-type liquid crystal display device is considered adequate for practical use. The conventional example using a reflection-type polarizing film is disclosed in, for example, Japan Patent Laid-open No. Hei 10-3078.

Moreover, a color filter with a thickness of 0.5 µm to 1.5 µm made of a color resist containing 25% to 40% pigment in a photoresist is used in a transmission-type color liquid crystal display device using a conventional backlight illumination. If the highest transmittance is defined as a maximum transmittance and the lowest transmittance is defined as a minimum transmittance in each color in the spectrum of a color filter, the maximum transmittance is about 80% to about 90% and the minimum transmittance is 10% or less.

In comparison, in the reflection-type color liquid crystal display device of the aforesaid third conventional example, it is necessary that the maximum transmittance of the color filter thereof is made 90% or higher and the minimum transmittance is made 20% or higher in order to improve brightness thereof, and therefore the thickness of the color filter is made 0.2 µm or less.

However, when the color filter decreases in thickness, the adherence thereof to a glass substrate forming a liquid crystal cell deteriorates, as a result, there arises the disadvantage that peeling-off of the color filter occurs or that the color filter is made thinner than required in width in an etching process.

Furthermore, in a reflection-type color liquid crystal display device using a conventional STN liquid crystal cell, since birefringence can not be corrected completely, its white color tone is yellowish and its color balance is not so excellent.

### DISCLOSURE OF THE INVENTION

The present invention is designed to solve these disadvantages and its first object is to provide a reflection-type color liquid crystal display device capable of displaying high brightness and high chroma without peeling-off of the color filter thereof.

The second object is to make the white color tone excellent and improve the color balance even in a reflection-type color liquid crystal display device using an STN liquid crystal cell.

The reflection-type color liquid crystal display device according to the present invention is structured as follows to attain the above objects.

An STN liquid crystal cell comprises a transparent first substrate having first electrodes, a transparent second substrate having second electrodes, a color filter consisting of filters with a plurality of colors provided on one of the first and second substrates, and a nematic liquid crystal which is aligned at a twist angle of 180° to 270° and sealed between the first and second substrates.

A polarizing film is provided on the outside of the second substrate which is the visible side of the STN liquid crystal cell, and one or a plurality of retardation films are provided between the polarizing film and the second substrate. Moreover, a diffusing layer, a reflection-type polarizing film and a light absorbing layer are provided in order on the outside of the first substrate of the STN liquid crystal cell.

Furthermore, the color filter is made of a color resist containing 5% to 20% pigment in a photoresist, and made to have a maximum transmittance of 80% or greater, a minimum transmittance of 20% to 50%, and a thickness of 0.5 µm to 2.0 µm.

As described above, a pigment dispersion-type color filter of which the concentration of the pigment is thinner than that of the conventional color filter (containing 25% to 40% pigment) is used as the color filter, thereby enabling a bright display without a decrease in thickness of the color filter.

Moreover, since the thickness of the color filter is nearly the same as that of the conventional transmission-type color liquid crystal display device, the adhesion to the glass substrate of the STN liquid crystal cell is strong, thereby avoiding a peel-off defect of the color filter and a decrease in width of the color filter during etching, resulting in a color display with high brightness and high chroma.

Furthermore, the so-called Z-type retardation film which satisfies the conditions of nx > nz > ny, where nx is the refractive index in a stretching direction of the retardation film, ny is the refractive index in a direction orthogonal to the stretching direction, and nz is the refractive index in a thickness direction, is used, whereby the viewing angle characteristic is improved and thus incident light from the surroundings is efficiently utilized, so that a brighter display can be obtained.

A twisted retardation film may be provided between the above-described polarizing film and the second substrate in place of the retardation film.

A color filter consisting of red filters, green filters and blue filters, or consisting of cyan filters, magenta filters and yellow filters is preferably used as above-described color filter, however a color filter consisting of filters of two colors or four or more colors can also be used.

When a color filter consisting of red filters, green filters and blue filters is used, the maximum transmittances of the color filters are made in the following order:
Blue filter > Green filter > Red filter
In this connection, the displayed color becomes bluish only by the color filter, but the color balance thereof can be improved by combining it with the yellowish characteristic of the STN liquid crystal cell, resulting in an excellent white display.

Alternatively, even when shield layers made of blue filters are provided in gaps between filters of each color in a color filter consisting of red filters, green filters, and blue filters, a white display with an excellent color balance can be obtained by enabling blue light to enter in between pixels of white display by the STN liquid crystal cell.

In the reflection-type color liquid crystal display device, a translucent-type light absorbing layer is provided in place of the light absorbing layer, and a backlight is provided on the other side of the reflection-type polarizing film with respect to the translucent-type light absorbing layer, this enables a bright display in dark circumstances such as at night by lighting the backlight.

It is also possible that one or a plurality of retardation films and a diffusing layer are provided between the second substrate, which is on the visible side of the STN liquid crystal cell, and the polarizing film provided on the outside of the second substrate, and an STN liquid crystal cell provided with a reflection layer for reflecting light passing through the color filter on the first substrate is used as the STN liquid crystal cell, so that nothing is provided on the outside of the first substrate.

In the above case, a color filter consisting of filters of a plurality of colors provided in the STN liquid crystal cell is also the same as in the aforesaid one.

### BRIEF DESCRIPTION OF DRAWINGS

FIG. 1 is a schematic sectional view showing the structure of a first embodiment of a reflection-type color liquid crystal display device according to the present invention;
FIG. 2 is a plan view showing an example of the shapes of a color filter and second electrodes of the same;
FIG. 3 is an explanatory view of the positional relation between an STN liquid crystal cell and a reflection-type polarizing film of the same;
FIG. 4 is an explanatory view of the positional relation between an absorption-type polarizing film and a retardation film of the same;
FIG. 5 is a diagram showing spectral characteristics of the color filter in the reflection-type color liquid crystal display device shown in FIG. 1;
FIG. 6 is a diagram showing spectral characteristics in the ON state and the OFF state in a case where the color filter is removed from the reflection-type color liquid crystal display device shown in FIG. 1;
FIG. 7 is a schematic sectional view showing the structure of a second embodiment of the reflection-type color liquid crystal display device according to the present invention;
FIG. 8 is a plan view showing an example of the shapes of a color filter and second electrodes of the same;
FIG. 9 is an explanatory view of the positional relation between an STN liquid crystal cell and a reflection-type polarizing film of the same;
FIG. 10 is an explanatory view of the positional relation between an absorption-type polarizing film and a twisted retardation film of the same;
FIG. 11 is a schematic sectional view showing the structure of a third embodiment of the reflection-type color liquid crystal display device according to the present invention;
FIG. 12 is a plan view showing an example of the shapes of a color filter, first electrodes, and second electrodes of the same;
FIG. 13 is a schematic sectional view showing the structure of a fourth embodiment of the reflection-type color liquid crystal display device according to the present invention; and
FIG. 14 is a plan view showing an example of the shapes of a color filter, second electrodes, and a reflection layer of the same.

### BEST MODE FOR CARRYING OUT THE INVENTION

In order to explain the present invention in detail, the best mode of the present invention will be described in accordance with the accompanying drawings.

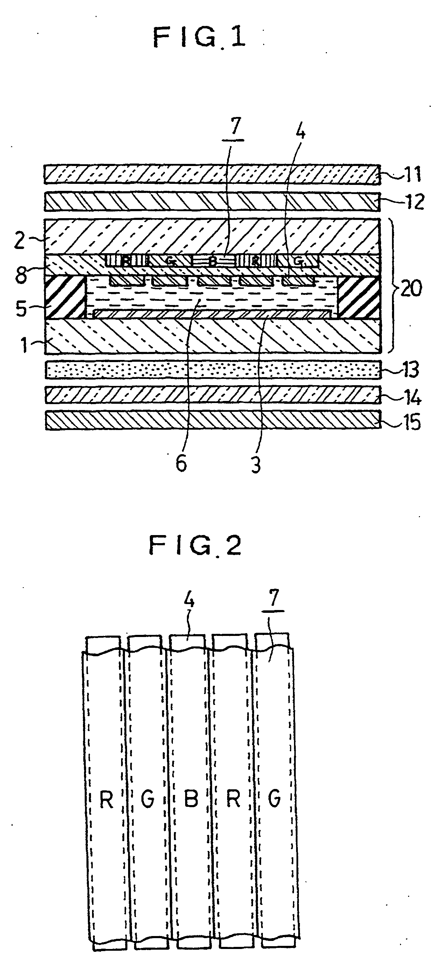

### First embodiment: FIG. 1 to FIG. 6

The first embodiment of a reflection-type color liquid crystal display device according to the present invention will be described with reference to FIG. 1 to FIG. 6.

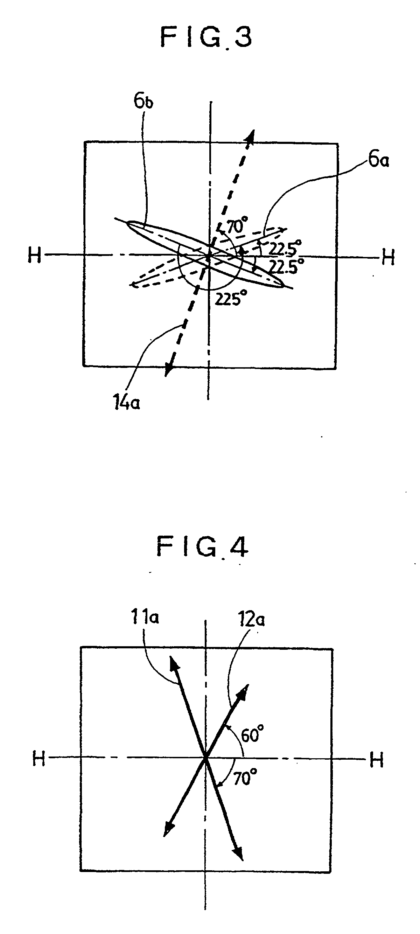

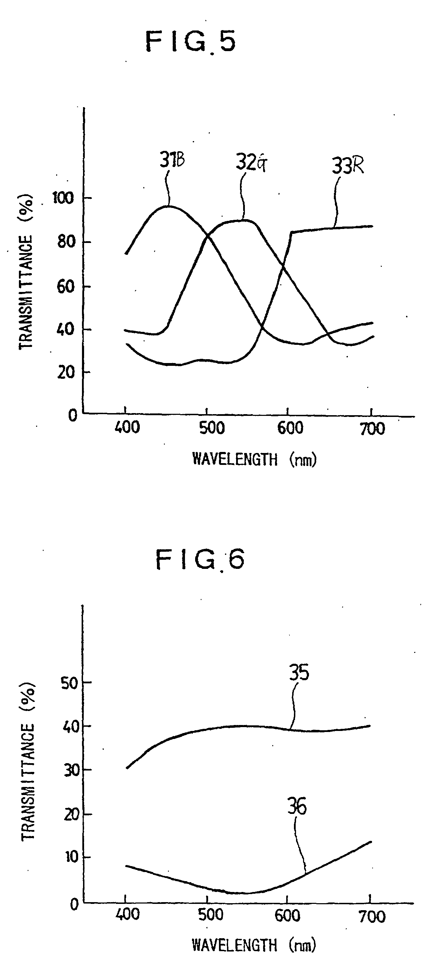

FIG. 1 is a schematic sectional view showing the structure of the reflection-type color liquid crystal display device, and FIG. 2 is a plan view showing an example of the shapes of a color filter and second electrodes thereof. Moreover, FIG. 3 and FIG. 4 are plan views each showing the positional relation between components thereof. FIG. 5 is a diagram showing spectral characteristics of the color filter, and FIG. 6 is a diagram showing spectral characteristics in the ON state and the OFF state in a case where the color filter is removed from the reflection-type color liquid crystal display device shown in FIG. 1. In the reflection-type color liquid crystal display device of the first embodiment, as shown in FIG. 1, an STN liquid crystal cell 20 is composed such that a transparent first substrate 1 and a transparent second substrate 2 each of which is made of a glass plate with a thickness of 0.5 mm are bonded together with a fixed space therebetween using a sealing member 5, and a nematic liquid crystal 6, which is aligned at a twist angle of 225°, is sealed and sandwiched between the first substrate and the second substrate.

On the inner surface of the first substrate 1, transparent first electrodes 3 made of indium tin oxide (hereinafter referred to as "ITO") are formed in stripe-like shape at spaced intervals in a direction orthogonal to the paper surface.

Moreover, on the inner surface of the second substrate 2, a color filter 7 with a thickness of 1.0 µm formed by the pigment dispersion method and a protection film 8 with a thickness of 2 µm made of an acrylic material are provided, and second electrodes 4 made of ITO are formed on the protection film 8.

On the outside (the upper side in FIG. 1) of the second substrate 2, which is the visible side of the STN liquid crystal cell 20, an absorption-type polarizing film (hereinafter referred to as only "a polarizing film") 11 having a transmission axis and an absorption axis, which is a typical polarizing film, is provided, and a retardation film 12 is provided between the polarizing film 11 and the second substrate 2. It is preferable that the polarizing film 11 has a transmittance of about 46% and the retardation film 12 has a retardation value Rf where Rf = approximately 0.55 µm.

On the outside (the lower side in FIG. 1) of the first substrate 1, which is the other side of the visible side of the STN liquid crystal cell 20, a diffusing layer 13, a reflection-type polarizing film 14 and a light absorbing layer 15 are arranged in order.

As described above, the reflection-type color liquid crystal display device comprises the STN liquid crystal cell 20 having a color filter therein, the polarizing film 11 and the retardation film 12 disposed on the visible side thereof, and the diffusing layer 13, the reflection-type polarizing film 14, and the light absorbing layer 15 which are disposed on the other side of the visible side.

The reflection-type polarizing film 14 will now be described. A typical polarizing film is an absorption-type polarizing film having a transmission axis for transmitting light and an absorption axis for absorbing light. However, the reflection-type polarizing film 14 has a transmission axis for transmitting light and a reflection axis (orthogonal to the transmission axis) for reflecting light. When black printing or a black film is provided on the outside of the reflection-type polarizing film 14 as a light absorbing layer 15, a black display can be obtained if the polarized direction of the linearly polarized incident light is in a direction of the transmission axis, and a white display, which is a bright white display owing to a high reflection efficiency, can be obtained if the polarized direction of the above is in a direction of the reflection axis.

Since the surface of the reflection-type polarizing film 14 is a mirror surface, it is bright in the direction of regular reflection of incident light but it becomes dark at other angles, and thus the viewing angle characteristic thereof is poor. To improve the viewing angle characteristic, the diffusing layer 13 is provided on the surface of the reflection-type polarizing film 14.

This embodiment employs R-DF-B (trade name) manufactured by Sumitomo 3M Ltd. which is a reflection-type polarizing film of the integral-type in which a diffusing adhesive layer made by dispersing minute particles in an adhesive is formed on the front face as the diffusing layer 13, and black printing is given on the rear face as the light absorbing layer 15. The reflection-type polarizing film consists of multi-layered thin films which have different reflective indexes. In addition to this, a reflection-type polarizing film consisting of a cholesteric liquid crystal polymer sandwiched between λ/4 (quarter wavelength) films or one utilizing a hologram may be used.

The retardation film 12 is a film made of stretched polycarbonate with a thickness of about 70 µm, with nx > nz > ny condition, where nx is the refractive index in a stretching direction, ny is the refractive index in a direction orthogonal to the stretching direction, and nz is the refractive index in a thickness direction. The above film is the so-called Z-type retardation film and integrates with the polarizing film 11 with an acrylic adhesive. The Z-type retardation film exhibits little change in retardation when seen from a tilted viewing angle, consequently, the viewing angle characteristic of the liquid crystal display device can also be improved.

The color filter 7 consists of three color filters of red filters R, green filters G, and blue filters B which are formed into vertical stripes shape each having a given width as shown in FIG. 2. Each color filter is formed wider than the second electrode 4 so as not to produce a gap. If a gap is produced between the color filters of the color filter 7, the display becomes bright due to the increase of incident light, but it is not preferable that the degree of purity of colors decreases because white light mixes into the display colors.

The relation between the thickness of the first substrate 1 and colors will be described next. The color filter 7 is placed inside the second substrate 2, and incident light from the visible side passes through the polarizing film 11, the retardation film 12, the second substrate 2, the color filter 7 and the nematic liquid crystal 6. Then, after passing through the first substrate 1, the incident light is reflected by the reflection-type polarizing film 14 and returns to pass again through the first substrate 1, the nematic liquid crystal 6, the color filter 7, and finally the polarizing film 11, to reach the observer's eye.

However, if the first substrate 1 is thick, the color of the color filter 7 through which incident light from a slanting direction passes when it is incident differs from the color of the color filter 7 through which the incident light passes when it is reflected, resulting in a lowering of the chroma due to color mixture. Accordingly, the thinner the first substrate 1 is, the less color mixture due to incident light from a slanting direction there is, thereby obtaining excellent colors.

Prototypes of the STN liquid crystal cell 20 of which the first substrate 1 is variously changed in thickness are made, which shows that the first substrate 1 with a thickness of 0.5 mm or less provides excellent colors. The thinner the first substrate 1 is, the more excellent the colors become. However, if the first substrate 1 is too thin, the workability deteriorates and the strength also lowers, therefore it is preferable to have a thickness of 0.1 mm or more. In this embodiment, a glass plate having a thickness of 0.5 mm is used for both the first substrate 1 and the second substrate 2.

The color filter 7 is preferably as high as possible in maximum transmittance in spectrum to improve brightness; and the maximum transmittance of each color filter is preferably 80% or higher, and more preferably 90% or higher. Furthermore, the minimum transmittance in spectrum needs to be made as high as 20% to 50%.

As the color filter 7, a color filter of a pigment dispersion-type, a dyeing-type, a printing-type, a transcription-type, an electro-deposition-type or the like can be used. A pigment dispersion-type color filter in which pigment is dispersed in an acrylic or PVA photoresist is the most preferable because of its high heat resistance temperature and high purity of colors.

In order to obtain the pigment dispersion-type color filter having a high transmittance as described above, a thin color filter having a thickness of 0.3 µm or less is conventionally formed by applying a color resist containing 25% to 40% pigment in a photoresist on the second substrate 2 with a spinner, and performing an exposing process and a developing process. However, when the color filter is thin in thickness, the adherence thereof to the second substrate 2 deteriorates, which causes a partial peel-off defect of the color filter, narrowing of the width of the color filter due to over-etching, or jaggy side edges of the color filter, and thus a stable shape can not be obtained.

In this embodiment, a color resist containing about 10% of pigment in a photoresist is used, thereby forming the color filter 7 having a maximum transmittance of 90% or more and a minimum transmittance of about 40% in spectrum in spite of having a thickness of about 1.0 µm. The color filter 7 which is excellent in adherence and uniform in width without a gap and has a desired size, can be obtained. The mixing ratio of the pigment in relation to the photoresist is not limited to 10% but also to a suitable ratio within a range from 5% to 20% according to the thickness and the like.

The spectral characteristics of the color filter 7 employed in this embodiment are shown in FIG. 5. A curved line 31B shows the spectral characteristic of the blue filter B, a curved line 32G shows that of the green filter G, and a curved line 33R shows that of the red filter R. Any color filter has a maximum transmittance of about 90% and its minimum transmittance is set at about 25 % to 40%. It is not preferable that the display becomes dark where the minimum transmittance is 20% or less and the chroma lowers where conversely the minimum transmittance is 50% or more.

Though the same spectral characteristics of the color filter used in this embodiment can be obtained through the use of a color filter varying in thickness by adjusting the concentration of pigment in relation to a photoresist, the adherence thereof to the second substrate 2 deteriorates where the thickness of the color filter is 0.5 µm or less. It is not preferable where the concentration of pigment is made too thin, the thickness of the color filter is made 2 µm or more, which increases unevenness in thickness and a difference in level at an overlapped portion of the three colors filters. Accordingly, it is suitable that the thickness of the color filter is about 0.5 µm to 2.0 µm, and preferably, approximately 1.0 µm, which is the thickness of the color filter used in this embodiment.

The transmittances of the first electrodes 3 and the second electrodes 4 made of ITO are also important in terms of brightness. The lower the sheet resistance value of ITO is, the thicker the film thickness becomes and the lower the transmittance becomes. Since the first electrodes 3 are applied with a data signal, ITO having little influence due to cross-talk and a sheet resistance of about 100 ohms is used for them, and its average transmittance is made about 92%.

Since the second electrodes 4 are applied with a scanning signal, ITO having a sheet resistance of about 10 ohms is used for them in order to reduce cross-talk, and thus its average transmittance becomes about 89%. However, sufficient brightness can be obtained by employing transparent electrodes having a transmittance of 90% or more on at least one substrate as in this embodiment.

The positional relations between components will be described using FIG. 3 and FIG. 4. On the surfaces of the first electrodes 3 and the second electrodes 4 shown in FIG. 1, alignment layers (not shown) are respectively formed. As shown in FIG. 3, the alignment layer on the first substrate 1 side is subjected to a rubbing treatment in a direction upward to the right at a 22.5° angle with respect to the horizontal axis H-H, whereby a lower molecular alignment direction 6a of liquid crystal of the nematic liquid crystal 6 is disposed at a 22.5° angle in a counterclockwise direction. Meanwhile, the alignment layer on the second substrate 2 side is subjected to a rubbing treatment in a direction downward to the right at a 22.5° angle with respect to the horizontal axis H-H, whereby an upper molecular alignment direction 6b of liquid crystal of the nematic liquid crystal 6 is disposed at a 22.5° angle in a clockwise direction.

A so-called "chiral" material, which is an optical rotatory material, is added to the nematic liquid crystal 6 having a viscosity of 20cp sandwiched between the first substrate 1 and the second substrate 2, and the chiral pitch P thereof is adjusted to 11 µm, thus forming the STN liquid crystal cell 20 twisted at a left-handed angle of 225°.

A difference Δn in birefringence of the nematic liquid crystal 6 in use is set to 0.15 and a cell gap d which is a gap between the first substrate 1 and the second substrate 2 is set to 5.6 µm. Accordingly, Rs, which is a Δnd value of the STN liquid crystal cell 20, represented by the product of the difference Δn in the birefringence of the nematic liquid crystal 6 and the cell gap d, is 0.84 µm.

A transmission axis 14a of the reflection-type polarizing film 14 is directed at a 70° angle in a counterclockwise direction with respect to the horizontal axis H-H shown in FIG. 3. A transmission axis 11a of the polarizing film 11 is directed at a 70° angle in a clockwise direction with respect to the horizontal axis H-H shown in FIG. 4, and a stretching axis 12a of the retardation film 12 is directed at a 60° angle in a counterclockwise direction also with respect to the horizontal axis H-H shown in FIG. 4.

The reflection-type color liquid crystal display device of this embodiment structured as above goes into a normally-white mode displaying white in a state where no voltage is applied (OFF), in which light is incident also through between pixels (portions at which first electrodes 3 and second electrodes 4 intersect), so that a bright display can be obtained. Applying voltage (ON) between the first electrodes 3 and the second electrodes 4, molecules of the nematic liquid crystal 6 rise, resulting in a black display. The combination of ON and OFF for each color enables a full-color display.

FIG. 6 shows spectral characteristics in the ON state and the OFF state in a case where the color filter 7 is removed from the reflection-type color liquid crystal display device shown in FIG. 1. A curved line 35 shows the spectral characteristic in the OFF state displaying white, and a curved line 36 shows the spectral characteristic in the ON state displaying black when the reflection-type color liquid crystal display device is driven at a frame frequency of 120 Hz.

To improve brightness, the reflection-type color liquid crystal display device is designed such that the average transmittance thereof becomes highest though it displays somewhat yellowish during OFF as shown by the curved line 35 and that it can obtain an excellent black characteristic by shutting light nearly uniformly within the whole wavelength region during ON as shown by the curved line 36.

It should be noted that the maximum transmittances of the color filters forming the color filter 7 are made in the order:
Blue filter B > Green filter G > Red filter R in this embodiment as shown in FIG. 5 to improve whiteness during OFF, whereby the displayed color becomes bluish only by the color filter 7, but the color balance can be improved through a combination with the yellowish characteristic of the STN liquid crystal cell 20.

Moreover, the Z-type retardation film having relations of nx > nz > ny is used as the retardation film 12, whereby the viewing angle characteristic can be improved. The improvement of the viewing angle characteristic allows light to be incident from various directions, consequently, the display becomes bright and thus a more excellent reflection-type color liquid crystal display device can be obtained.

When the response speed of the STN liquid crystal cell 20 is fast, the contrast can be improved by boosting the frame frequency which is a driving frequency. However, if the frame frequency is boosted too high, cross-talk occurs, therefore it is preferable within a range from 100 Hz to 200 Hz. This embodiment is driven by writing a video signal of 60 Hz once in memory and reading it at twice the speed thereof at a frame frequency of 120 Hz.

In this embodiment, in the reflection-type color liquid crystal display device which comprises the polarizing film 11, the Z-type retardation film 12, the STN liquid crystal cell 20, the reflection-type polarizing film 14, and the like as described above, the STN liquid crystal cell 20 is provided with the color filter with a thickness of about 1.0 µm, a maximum transmittance of 80% or more, and a minimum transmittance of 20% to 50%, thereby obtaining a reflection-type color liquid crystal display device with high brightness and high chroma without a peel-off defect or the like of the color filter.

### Modification of the first embodiment:

In the aforesaid first embodiment, the STN liquid crystal cell 20 with Rs = 0.84 µm at a twist angle of 225° is used as an STN liquid crystal cell. Even if an STN liquid crystal cell with Rs = 0.7 µm to 1.0 µm at a twist angle of 180° to 270° is used, the similar reflection-type color liquid crystal display device can be obtained by optimizing arrangement angles of the polarizing film 11, the retardation film 12 and the reflection-type polarizing film 14.

Moreover, a color filter consisting of filters of three colors red, green and blue is used as the color filter 7 in this embodiment. Even if a color filter consisting of filters of three colors, such as cyan, yellow and magenta is used, a color filter with a thickness of about 1 µm, a maximum transmittance of 80% or more and a minimum transmittance of 20% to 50% can be obtained by adjusting the concentration of pigment, whereby a bright color display can be realized even with the above color filter disposed inside the STN liquid crystal cell.

Furthermore, though the polarizing film 11 having a transmittance of 46% is used in the first embodiment, it is preferable to use a polarizing film with a transmittance of 45% or more and a polarization degree of 95% or more in order to obtain excellent brightness. It is possible to use even a polarizing film with a transmittance of less than 45% though the display becomes somewhat dark.

Moreover, though one retardation film 12 is provided in the first embodiment, it is also possible to use a plurality of retardation films. A plurality of retardation films are used and the arrangement angles and the retardation values thereof are optimized, thereby obtaining further excellent contrast.

Furthermore, the retardation film 12 is provided between the second substrate 2 and the polarizing film 11 in the first embodiment, but even if it is provided between the first substrate 1 and the diffusing layer 13, the same effect can be obtained.

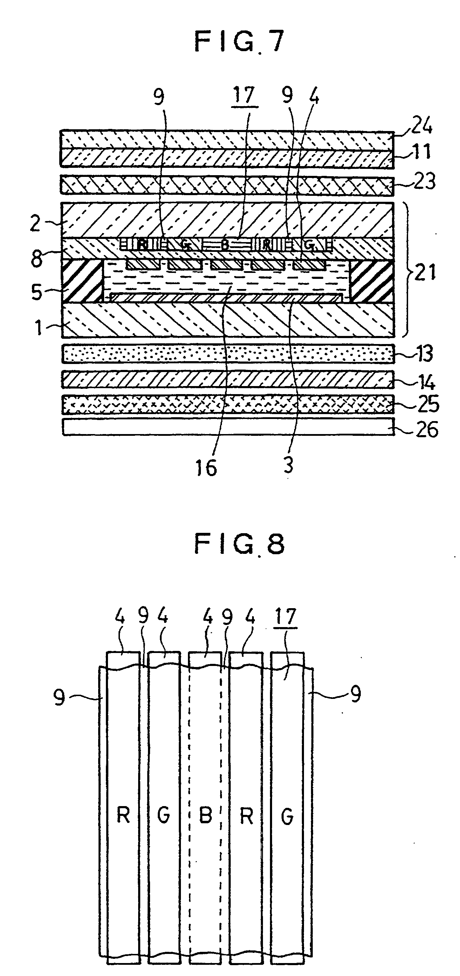

### Second embodiment: FIG. 7 to FIG. 10

The second embodiment of the reflection-type color liquid crystal display device according to the present invention will be described with reference to FIG. 7 to FIG. 10.

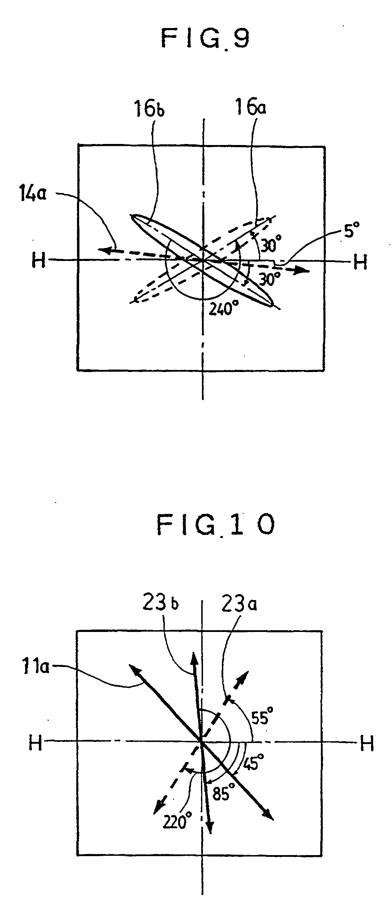

FIG. 7 is a schematic sectional view showing the structure of the reflection-type (transflective) color liquid crystal display device, and FIG. 8 is a plan view showing an example of the shapes of a color filter and second electrodes thereof. Moreover, FIG. 9 and FIG. 10 are plan views each showing the positional relation between components thereof. In these drawings, the same numerals are given to portions corresponding to those in FIG. 1 to FIG. 4 of the first embodiment.

The reflection-type (transflective) color liquid crystal display device of the second embodiment is different from that of the first embodiment in structure in that: a twisted retardation film 23 is provided between a polarizing film 11 and a second substrate 2 in place of the retardation film 12 in the first embodiment shown in FIG. 1; the twist angle of an STN liquid crystal cell 21 differs from that of the STN liquid crystal cell 20 in the first embodiment; an anti-reflection layer 24 is provided on the outer surface of the polarizing film 11; a translucent-type light absorbing layer 25 and a backlight 26 are provided in place of the light absorbing layer 15 in the first embodiment; and shield layers 9 made of blue filters B are provided in a color filter 17.

More specifically, in the reflection-type (transflective) color liquid crystal display device of the second embodiment, as shown in FIG. 7, the STN liquid crystal cell 21 comprises a first substrate 1 made of a glass plate with a thickness of 0.5 mm on which first electrodes 3 made of ITO are formed, the second substrate 2 made of a glass plate with a thickness of 0.5 mm on which a protection film 8 made of an acrylic material with a thickness of 2 µm, the color filter 17 and second electrodes 4 made of ITO are formed, a sealing member 5 for bonding the first substrate 1 and the second substrate 2 together with a fixed space therebetween, and nematic liquid crystal 16, which is aligned at a left-handed twist angle of 240°, sealed and sandwiched between the first substrate 1 and the second substrate 2.

On the outside (the lower side in FIG. 7) of the first substrate 1 of the STN liquid crystal cell 21, a diffusing layer 13, a reflection-type polarizing film 14, the translucent-type light absorbing layer 25 and the backlight 26 made of a white electro-luminescence (EL) film are arranged in order. On the other hand, on the outside (the visible side) of the second substrate 2, the twisted retardation film 23 and a polarizing film 11 having a transmittance of 46% coated with the anti-reflection layer 24 on the outer surface thereof are arranged in order to form the reflection-type (transflective) color liquid crystal display device.

As the reflection-type polarizing film 14, R-DF-C (trade name) manufactured by Sumitomo 3M Ltd. in which a black printing layer on the rear face is omitted and a diffusing adhesive layer is formed on the front face as the diffusing layer 13, is used. As the translucent-type light absorbing layer 25, a polyethylene terephthalate (PET) film which is dyed with a black dye so as to have a transmittance of 40% is bonded to the rear face of the reflection-type polarizing film 14.

The twisted retardation film 23 is a film that a liquid crystal polymer having a twist is applied to triacetyl cellulose (TAC) film or PET film after an aligning treatment, made into a liquid crystal state at a high temperature of about 150°C, and cooled rapidly to room temperature after adjusting the twist angle to fix the twisted state. The twisted retardation film 23 twisted right-handed with a twist angle Tc of 220° in a clockwise direction and Rc, which is Δnd, of 0.61 µm is used in this embodiment.

The anti-reflection layer 24 made of several evaporated inorganic thin films having a reflectance of about 0.5% is provided on the surface of the polarizing film 11, whereby the surface reflection by the polarizing film 11 is reduced so that the transmittance is improved, resulting in a brighter display. Moreover, the light reflected by the surface of the polarizing film 11 is reduced, whereby the black level during the ON state lowers and thus the contrast improves, so that a reflection-type color liquid crystal display device with high brightness and high chroma can be obtained.

However, since an evaporated film is expensive, anti-reflection films of a coating-type which are coated with one to two layers of an organic material, have been developed recently. Although the above anti-reflection films have a reflectance of about 1%, which is a little high, they are low in cost, and thus these anti-reflection films can also be used as the anti-reflection film 24.

The color filter 17 consists of three colors of red filters R, green filters G, and blue filters B, which are formed into vertical stripes shape as shown in FIG. 8 in this embodiment. In gap portions between the second electrodes 4, the shield layers 9 made of the blue filters B are provided.

The blue filters B are made wide in width, whereby they become the shield layers 9 in gaps between the blue filters B and the red filters R and gaps between the blue filters B and the green filters G, and narrow shield layers 9 are made of blue filters B between the red filters R and the green filters G.

The shield layers 9 are provided using the blue filters B, whereby no gaps exist even though positions where the red filters R and the green filters G are formed are displaced, so that the degrees of purity of colors are improved. Moreover, the color balance is improved by the blue light passing through the shield layers 9, thereby obtaining an excellent white display.

Also for the color filter 17 in this embodiment, a color resist containing 5% to 20% (preferably about 10%) pigment in a photoresist is used as in the case of the color filter 7 used in the first embodiment, thereby forming the color filter 17 having a maximum transmittance of 90% or more and a minimum transmittance of about 25% to 40% as in the case of the spectrum of the color filter of the first embodiment shown in FIG. 5 in spite of having a thickness of about 1.0 µm. The color filter 17 which is excellent in adherence and uniform in width without a gap and has a desired size can be obtained. Furthermore, the shield layers 9 with a width of 10 µm which are made of the blue filters B between the red filters R and the green filters G can be formed in excellent shapes.

Next, the positional relations between components in this reflection-type (transflective) color liquid crystal display device will be described using FIG. 9 and FIG. 10.

On the surfaces of the first electrodes 3 and the second electrodes 4 shown in FIG. 7, alignment layers (not shown) are respectively formed. As shown in FIG. 9, the alignment layer on the first substrate 1 side is subjected to a rubbing treatment in a direction upward to the right at a 30° angle with respect to the horizontal axis H-H, whereby a lower molecular alignment direction 16a of liquid crystal of nematic liquid crystal 16 is disposed at a 30° angle in a counterclockwise direction. The alignment layer on the second substrate 2 side is subjected to a rubbing treatment in a direction downward to the right at a 30° angle with respect to the horizontal axis H-H, whereby an upper molecular alignment direction 16b of liquid crystal of the nematic liquid crystal 16 is disposed at a 30° angle in a clockwise direction.

A so-called "chiral" material, which is an optical rotatory material, is added to the nematic liquid crystal 16 having a viscosity of 20cp and the chiral pitch P thereof is adjusted to 11 µm, thus forming the STN liquid crystal cell 21 with a left-handed twist angle Ts = 240°.

The difference Δn in birefringence of the nematic liquid crystal 16 in use is set to 0.15 and a cell gap d which is a gap between the first substrate 1 and the second substrate 2 is set to 5.6 µm. Accordingly, Rs, which is a Δnd value of the STN liquid crystal cell 21, represented by the product of the difference Δn in the birefringence of the nematic liquid crystal 16 and the cell gap d, is 0.84 µm.

A transmission axis 14a of the reflection-type polarizing film 14 is directed at a 5° angle in a clockwise direction similarly with respect to the horizontal axis H-H shown in FIG. 9. A transmission axis 11a of the polarizing film 11 is directed at a 45° angle in a clockwise direction with respect to the horizontal axis H-H shown in FIG. 10. A lower molecular alignment direction 23a of the twisted retardation film 23 is directed at a 55° angle in a counterclockwise direction similarly with respect to the horizontal axis H-H shown in FIG. 10 and an upper molecular alignment direction 23b thereof is directed at an 85° angle in a clockwise direction, and thus a twist of a right-handed twist angle Tc = 220°, resulting in ΔT = Ts - Tc = 20° where ΔT is the difference in absolute value of the twist angle between the twisted retardation film 23 and the STN liquid crystal cell 21.

The STN liquid crystal cell 21 can be corrected best when the absolute values of the twist angles thereof and the twisted retardation film 23 are equal, that is, ΔT = 0, whereby excellent white can be obtained during the OFF state. However, it is not suitable for a reflection-type color liquid crystal display device because excellent black is not displayed during the ON state resulting in a low contrast. In order to display excellent black in shutter performance, it is preferable that ΔT = 10° to 30°. Especially, in the case of ΔT = 20° used in the reflection-type (transflective) color liquid crystal display device of this embodiment, the transmittance of white during the OFF state is high and the shutter performance of black during the ON state is good, more than that, the viewing angle characteristic is also excellent.

The reflection-type (transflective) color liquid crystal display device structured as above goes into a normally white mode displaying white where no voltage is applied (OFF), in which light is incident also through between pixels, so that a bright display can be obtained. Applying voltage (ON) between the first electrodes 3 and the second electrodes 4, molecules of the nematic liquid crystal 16 rise, resulting in a black display. The combination of ON and OFF for each color enables a full-color display.

Moreover, since the reflection-type (transflective) color liquid crystal display device of this embodiment is provided with the translucent-type light absorbing layer 25 and the backlight 26, thereby enabling recognition of the display even at night. However, since light of the backlight 26 passes through polarizing elements in a direction of the transmission axis of the reflection-type polarizing film 14, and it does not pass through polarizing elements in a direction of the reflection axis thereof, resulting in a reverse display in which white and black are reversed. So, a data signal applied to the liquid crystal display device is reversed during lighting of the backlight 26, whereby a normal color display can be obtained.

In this embodiment, the reflection-type color liquid crystal display device which comprises the polarizing film 11 provided with the anti-reflection layer 24, the twisted retardation film 23, the STN liquid crystal cell 21 and the reflection-type polarizing film 14 is provided with the color filter with a thickness of about 1.0 µm, a maximum transmittance of 80% or more and a minimum transmittance of 20% to 50%, thereby providing a reflection-type (transflective) color liquid crystal display device with high brightness and high chroma without a peel-off defect and the like of the color filter.

Moreover, in this embodiment, the shield layers 9 made of the blue filters B are provided in gaps between the color filters of each color of the color filter 17, thereby further improving the color balance and chroma, and the translucent-type light absorbing layer 25 and the backlight 26 are provided, thereby providing a reflection-type (transflective) color liquid crystal display device capable of recognition of the display even at night.

### Modification of the second embodiment:

In the second embodiment described above, the STN liquid crystal cell 21 with a twist angle Ts = 240° and Rs = 0.84 µm is used as an STN liquid crystal cell. However, even if an STN liquid crystal cell with a twist angle of 180° to 270° and Rs = 0.7 µm to 1.0 µm is used, a similar reflection-type (transflective) color liquid crystal display device can be obtained by optimizing arrangement angles of the polarizing film 11, the twisted retardation film 23 and the reflection-type polarizing film 14.

Though the polarizing film 11 having a transmittance of 46% is used in the second embodiment, it is preferable to use a polarizing film having a transmittance of 45% or more and a polarization degree of 95% or more in order to obtain excellent brightness. It is, of course, possible to use even a polarizing film having a transmittance of less than 45% though the display becomes somewhat dark.

Moreover, a liquid crystal polymer film of which the twisted state is fixed at room temperature is used as the twisted retardation film 23 in the second embodiment. However, if a temperature-compensation-type twisted retardation film in which part of the liquid crystal molecules are only bound to polymer molecules in a chain state and Rc thereof varies with temperature is used, the brightness and contrast at high temperatures are improved, thus obtaining a better reflection-type (transflective) color liquid crystal display device.

Furthermore, though a white light emitting EL film is used as the backlight 26 in the second embodiment, a backlight in which a light guide plate provided with the three-wavelength-type fluorescent tube is used, thereby obtaining still better colors.

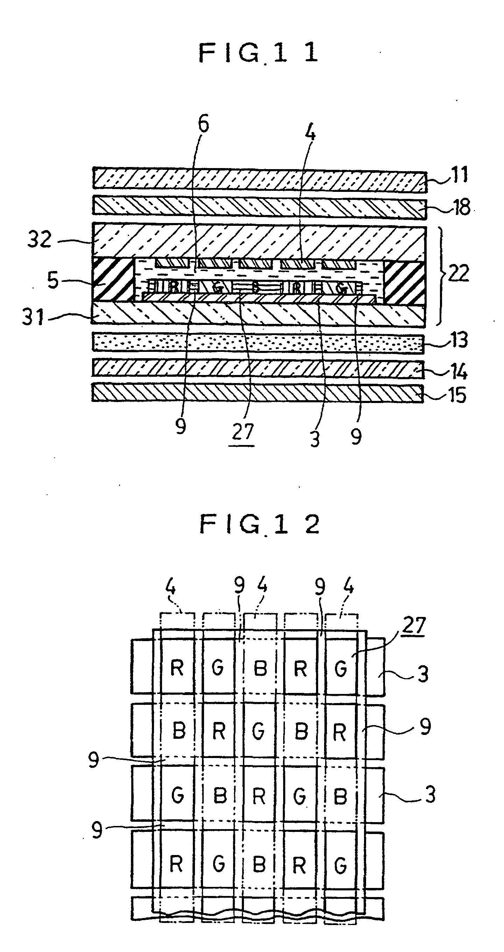

### Third embodiment: FIG. 11 and FIG. 12

The third embodiment of the reflection-type color liquid crystal display device according to the present invention will be described with reference to FIG. 11 and FIG. 12.

FIG. 11 is a schematic sectional view showing the structure of the reflection-type color liquid crystal display device, and FIG. 12 is a plan view showing an example of the shapes of a color filter and first and second electrodes thereof. The positional relations between components are omitted because they are the same as those in the first embodiment shown in FIG. 3 and FIG. 4. In these drawings, the same reference numerals are given to components corresponding to those in FIG. 1 and FIG. 2, therefore the description thereof will be omitted.

The reflection-type color liquid crystal display device of the third embodiment is the same as that of the first embodiment in structure except that: a first substrate is made thinner in thickness than a second substrate which form an STN liquid crystal cell; a color filter 27 in mosaic array is provided on first electrodes 3 of a first substrate 31 as a color filter; and a typical uniaxial-stretching-type film is used as a retardation film.

In this reflection-type color liquid crystal display device, as shown in FIG. 11, an STN liquid crystal cell 22 comprises the first substrate 31 made of a glass plate with a thickness of 0.4 mm provided with the first electrodes 3 made of ITO on which the color filter 27 with a thickness of 1.0 µm is formed by the pigment dispersion method, a second substrate 32 made of a glass plate with a thickness of 0.7 mm on which second electrodes 4 made of ITO are formed, a sealing member 5 for bonding the first substrate 31 and the second substrate 32 together with a fixed space therebetween, and a nematic liquid crystal 6, which is aligned at a clockwise twist angle of 225°, sealed and sandwiched between the first substrate 31 and the second substrate 32.

On the outside (the lower side in FIG. 11) of the first substrate 31 of the STN liquid crystal cell 22, a diffusing layer 13, a reflection-type polarizing film 14 and a light absorbing layer 15 are arranged in order. Meanwhile, on the outside (the visible side) of the second substrate 32, a retardation film 18 of the uniaxial-stretching-type having a retardation value Rf = 0.55 µm and a polarizing film 11 having a transmittance of 46% are arranged in order, thereby forming a reflection-type color liquid crystal display device.

As for the reflection-type polarizing film 14, which is the same as that used in the first embodiment, a reflection-type polarizing film of the integral-type in which a diffusing adhesive layer made by dispersing minute particles in an adhesive is formed on the front face as the diffusing layer 13 and a black printing layer is provided on the rear face as the light absorbing layer 15, is used. Moreover, the polarizing film 11 is also the same as that used in the first embodiment.

The first substrate 31 is made to be 0.4 mm in thickness, which is thinner than the first substrate 1 (0.5 mm in thickness) in the first embodiment, whereby color mixture due to incident light from a slanting direction is further decreased, thereby obtaining better chroma than in the first embodiment. Incidentally, since the thickness of the second substrate 32 exerts no influence upon display performance, it is made to be 0.7 mm in consideration of productivity and cost. Only the first substrate 31 is made thin as described above, thereby providing an excellent reflection-type color liquid crystal display device without decreasing productivity.

The color filter 27 consists of three color filters of red filters R, green filters G and blue filters B which are diagonally arranged in a mosaic array as shown in FIG. 12 in this embodiment, and shield layers 9 made of blue filters B are formed in gaps between the filter elements of each color as in the case of the second embodiment. Through the diagonal arrangement in the mosaic array, color mixture occurs due to incident light also in a vertical direction in FIG. 12, and thus the chroma lowers. However, since the first substrate 31 is made thin to have a thickness of 0.4 mm in this embodiment, the lowering of the chroma is small.

Moreover, the shield layers 9 are provided using the blue filters B, whereby there exist no gaps even though positions where the red filters R and the green filters G formed are displaced, so that the degrees of purity of colors are improved. Moreover, the color balance is improved by the blue light passing through the shield layers 9, thereby obtaining an excellent white display.

Furthermore, the color filter 27 is formed directly on the first electrodes 3, whereby the protection film 8 used in the first embodiment becomes unnecessary. Accordingly, when the color filter 27 is provided on the first electrodes 3, part of a driving signal applied to the first electrodes 3 is lost in the color filter 27 and thus the contrast lowers, but low costs can be attained.

Moreover, the retardation film 18 is of the typical uniaxial-stretching-type and the refractive indexes are expressed by nx > ny = nz. Therefore, the viewing angle characteristic of the retardation film 18 is lower than that of the Z-type retardation film 12 used in the first embodiment, but low costs can be attained.

In this embodiment, the reflection-type liquid crystal display device which comprises the polarizing film 11, the retardation film 18 of the uniaxial-stretching-type, the STN liquid crystal cell 22, the reflection-type polarizing film 14 and the like is provided with the color filter 27 in a mosaic array with a thickness of about 1 µm, a maximum transmittance of 80% or more and a minimum transmittance of 20% to 50% directly on the first electrodes 3, thereby providing a reflection-type color liquid crystal display device with high brightness and high chroma without a peel-off defect and the like of the color filter at low cost.

### Modification of the third embodiment:

Though the color filter 27 is formed on the first electrodes 3 of the first substrate 31 in the above third embodiment, a similar reflection-type color liquid crystal display device can be obtained even if the color filter 27 is formed on the second electrodes 4 of the second substrate 32.

Though a glass substrate having a thickness of 0.4 mm is used as the first substrate 31 in the third embodiment, the thinner the first substrate 31 is, the better the colors that can be obtained. However, since the workability deteriorates if it is too thin, the thickness is preferably within about 0.1 mm to about 0.5 mm. Even if a plastic substrate such as polyethylene terephthalate (PET) is used for the first substrate 31, a similar reflection-type color liquid crystal display device can be obtained.

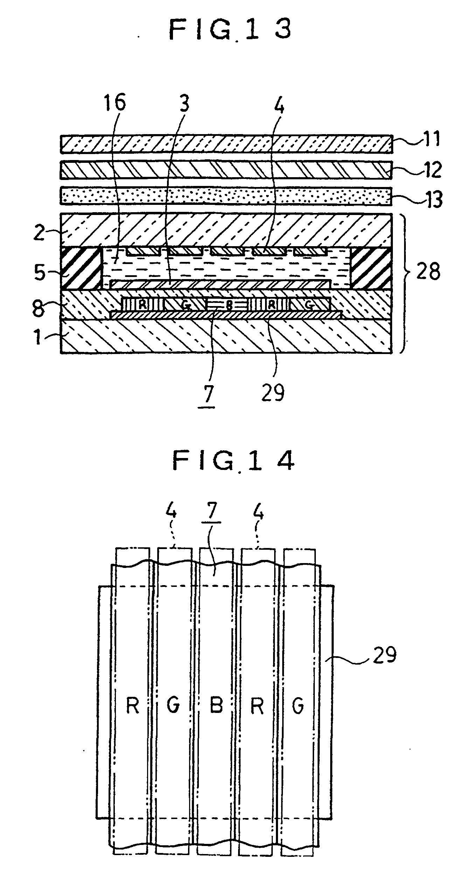

### Fourth embodiment: FIG. 13 and FIG. 14

The fourth embodiment of the reflection-type color liquid crystal display device according to the present invention will be described with reference to FIG. 13 and FIG. 14.

FIG. 13 is a schematic sectional view showing the structure of the reflection-type color liquid crystal display device, and FIG. 14 is a plan view showing an example of the shapes of a color filter, a reflection layer and second electrodes thereof. In these drawings, the same reference numerals are given to portions corresponding to those in FIG. 1 and FIG. 2.

The reflection-type color liquid crystal display device of the fourth embodiment is different from that of the first embodiment in structure in that: a reflection layer 29 is formed on a first substrate 1 of an STN liquid crystal cell 28 and a color filter 7 is provided on the reflection layer 29; and the diffusing layer 13 in FIG. 1 is moved between the second substrate 2 of the STN liquid crystal cell 28 and a retardation film 12 so as to make the reflection-type polarizing film 14 and the light absorbing layer 15 unnecessary.

This reflection-type color liquid crystal display device comprises an STN liquid crystal cell 28, a diffusing layer 13, the retardation film 12 and a polarizing film 11 which are provided in order on the outside (the visible side) of the second substrate 2 thereof as shown in FIG. 13. The polarizing film 11 and the retardation film 12 are integrated with each other with an acrylic adhesive.

The STN liquid crystal cell 28, in which the first substrate 1 and the second substrate 2, each of which is made of a glass plate with a thickness of 0.5 mm, are bonded together with a sealing member 5 with a fixed space therebetween, has a nematic liquid crystal 16, which is aligned at a counterclockwise twist angle of 240°, sandwiched between the first substrate 1 and the second substrate 2.

On the inner surface of the first substrate 1, the reflection layer 29 with a thickness of 0.2 µm made of aluminum is formed and the color filter 7 with a thickness of 1 µm consisting of three color filters of red filters R, green filters G and blue filters B is formed on the reflection layer 29, and both of them are covered with a protection film 8 with a thickness of 2 µm made of an acrylic material. Moreover, first electrodes 3 made of ITO are formed on the protection film 8 in horizontal stripes at spaced intervals in a direction orthogonal to the paper surface in FIG. 13.

On the inner surface of the second substrate 2, second electrodes 4 made of ITO are formed into vertical stripes as shown by imaginary lines in FIG. 14.

The diffusing layer 13 is provided to let the light reflected by the reflection layer 29 scatter so as to obtain a bright display with a wide viewing angle. The incident light is preferable which passes the diffusing layer 13 scattering in a forward direction as much as possible with less scattering in a rearward direction because high contrast can be obtained.

Here, a diffusing adhesive layer with a thickness of 30 µm which is the same as that used in the second embodiment is used as the diffusing layer 13 and also serves as an adhesive for bonding the liquid crystal cell 28 and the retardation film 12 together. The polarizing film 11 and the retardation film 12 are the same as that used in the first embodiment.

The color filter 7, which is also the same as that used in the first embodiment, consists of three color filters of red filters R, green filters G and blue filters B, and are formed into parallel vertical stripes shape overlaid on the second electrodes 4 as shown in FIG. 14 on the reflection layer 29 which is formed nearly on the entire inner surface of the first substrate 1 of the STN liquid crystal cell 28. Each color filter is formed wider than the second electrode 4 so as not to produce a gap.

When gaps are produced between the color filters R, G and B of the color filter 7, the display becomes bright due to the increase of incident light, but it is not preferable that the degree of purity of colors decreases because white light mixes into the display colors.

The mixing ratio of a pigment in relation to a photoresist, the thickness, the maximum transmittance, the minimum transmittance, and the like of this color filter are the same as those of the color filter of the first embodiment.

In this embodiment, the reflection layer 29 made of an aluminum thin film is formed on the first substrate 1 and after the surface of the reflection layer 29 is made inert by an anodization treatment, a color resist containing 5% to 20% (about 10% is most suitable) pigment in a photoresist is applied on the first substrate 1 using a spinner, and thereafter it is subjected to an exposing process and a developing process, thereby forming the color filter 7 with a high transmittance even though it has a thickness of about 1 µm.

Even with this reflection-type color liquid crystal display device, the same effect as in the first embodiment can be obtained. Moreover, since the color filter 7 and the reflection layer 29 are adhered to each other, the color of the color filter through which incident light from a slanting direction passes when it is incident never differs from that when it is reflected, thus obtaining a display with excellent chroma.

As the color filter of this embodiment, a color filter consisting of cyan filters, magenta filters, and yellow filters may be used, or a color filter consisting of filters of two colors or four or more colors can also be used.

Though an STN liquid crystal cell twisted at a 240° angle is used as the liquid crystal cell 28 in this embodiment, the similar reflection-type color liquid crystal display device can be obtained even with a liquid crystal cell at a twist angle of 200° to 260° by adjusting the arrangement angles of the polarizing film 11 and the retardation film 12 and the retardation value of the retardation film 12.

Moreover, though one retardation film 12 is used in this embodiment, it is also possible to use a plurality of retardation films, thereby obtaining a still better contrast.

Furthermore, though the color filter 7 is provided on the first substrate 1 in this embodiment, the color filter 7 can also be provided between the second electrodes 4 and the second substrate 2 inside the second substrate 2. However, it is more preferable that the color filter 7 is provided on the first substrate because the protection film 8 can serve both for flattening the color filter 7 and as an insulating layer between the reflection layer 29 and the first electrodes 3.

Though the surface of the aluminum thin film is made inert by an anodization treatment for the reflection layer 29 so as to endure to a cleaning line of a color filter fabricating process, it is also possible that a transparent oxidation film such as SiO₂ or the like is formed on the aluminum thin film by the spattering or the CVD. Furthermore, as a material of the reflection layer 29, thin film made of aluminum alloy or silver, or multi-layered film made of aluminum and inorganic oxide can also be used.

### INDUSTRIAL APPLICABILITY

As is clear from the above description, the reflection-type color liquid crystal display device according to the present invention can perform a color display with high brightness and high chroma without on occurrence of a peel-off defect of the color filter. Moreover, a white display excellent in color balance becomes possible.

Accordingly, this reflection-type color liquid crystal display device is expected to be used widely for various color displays of various kinds of electronic devices, of which the displays are desired to be colored, specifically, portable electronic devices such as a wrist watch, a cellular phone, a personal digital assistant (PDA), a portable type game machine and the like, a personal computer, and so on.

## Claims

1. A reflection-type colour liquid crystal display device, comprising:
an STN liquid crystal cell (20; 21; 22) comprising a transparent first substrate (1; 31) having first electrodes (3), a transparent second substrate (2; 32) having second electrodes (4), a colour filter (7; 17; 27) consisting of filters of a plurality of colours provided on one of said first and second substrates, and a nematic liquid crystal (6; 16), which is aligned at a twist angle of 180° to 270°, sealed between said first and second substrates;
a polarizing film (11) provided on the outside of said second substrate (2; 32) which is the visible side of said STN liquid crystal cell (20; 21; 22);
a diffusing layer (13), a reflection-type polarizing film (14) and a light absorbing layer (15) which are provided in order on the outside of said first substrate, wherein
said colour filter (7; 17; 27) has a maximum transmittance of 80% or more and a minimum transmittance of 20% to 50%
**characterized in that** it further comprises one or a plurality of retardation films (12) provided between said polarizing film (11) and said second substrate; and wherein said colour filter is made of a colour resist containing 5% to 20% pigment in a photoresist and has a thickness of 0.5 µm to 2.0 µm.

2. The reflection-type colour liquid crystal display device according to claim 1, wherein said retardation film (12) satisfies conditions of nx > nz > ny, where nx is the refractive index in a stretching direction of said retardation film, ny is the refractive index in a direction orthogonal to the stretching direction, and nz is the refractive index in a thickness direction.

3. The reflection-type colour liquid crystal display device according to claim 1, wherein a twisted retardation film (23) is provided between said polarizing film (11) and said second substrate (2) in place of said retardation film (11).

4. The reflection-type colour liquid crystal display device according to one of claims 1 to 3, wherein said colour filter (7; 17; 27) consists of red filters (R), green filters (G) and blue filters (B), and the maximum transmittances of the colour filters are in the order of blue filter > green filter > red filter.

5. The reflection-type colour liquid crystal display device according to one of claims 1 to 3, wherein said colour filter (17) consists of red filters (R), green filters (G) and blue filters (B), and shield layers made of the blue filters (B) are provided in gaps between filters of each colour.

6. The reflection-type colour liquid crystal display device according to one of claims 1 to 5, wherein a translucent-type light absorbing layer (25) is provided in place of said light absorbing layer (15), and a backlight (26) is provided on the other side of the translucent-type light absorbing layer (25) with respect to said reflection-type polarizing film (14).

7. A reflection-type colour liquid crystal display device, comprising:
an STN liquid crystal cell (28) comprising a transparent first substrate (1) having first electrodes (3), a transparent second substrate (2) having second electrodes (4), a colour filter (7) consisting of filters of a plurality of colours provided on one of said first and second substrates (1, 2), and a nematic liquid crystal (16), which is aligned at a twist angle of 180° to 270°, sealed between said first and second substrates (1, 2);
a polarizing film (11) provided on the outside of said second substrate (2) which is the visible side of said STN liquid crystal cell (28); and
one or a plurality of retardation films (12) provided between said polarizing film (11) and said second substrate (2); and
said STN liquid crystal cell (28) is provided with a reflection layer (29) for reflecting light passed through said colour filter (7) on said first substrate (1), wherein
said colour filter (7) has a maximum transmittance of 80% or more and a minimum transmittance of 20% to 50%,
**characterized in that**
said diffusing layer (13) is provided between said polarizing film (11) and
said second substrate (2), and
said colour filter is made of a colour resist containing 5% to 20% pigment in a photoresist and has a thickness of 0.5 µm to 2.0 µm.

8. The reflection-type colour liquid crystal display device according to claim 7, wherein said colour filter (7) consists of either, three colour filters of red filters, green filters and blue filters, or three colour filters of cyan filters, magenta filters and yellow filters.

## Patentansprüche

1. Farb-Flüssigkristallanzeigevorrichtung vom Reflexionstyp mit:
einer STN-Flüssigkristallzelle (20; 21; 22) mit einem durchsichtigen ersten Substrat (1; 31) mit ersten Elektroden (3), einem durchsichtigen zweiten Substrat (2; 32) mit zweiten Elektroden (4), einem Farbfilter (7;17;27) bestehend aus Filtern einer Mehrzahl von Farben, der auf einem von dem ersten und dem zweiten Substrat vorgesehen ist, und einem nematischen Flüssigkristall (6;16), der unter einem Drehwinkel von 180° bis 270° ausgerichtet ist, der zwischen dem ersten und dem zweiten Substrat eingeschlossen ist;
einem Polarisationsfilm (11), der an der Außenseite des zweiten Substrats (2; 32), die die sichtbare Seite der STN-Flüssigkristallzelle (20; 21; 22) bildet, vorgesehen ist; einer Diffusionsschicht (13), einem Polarisationsfilm vom Reflexionstyp (14) und einer lichtabsorbierenden Schicht (15), die in der Reihenfolge an der Außenseite des ersten Substrats vorgesehen sind, wobei
der Farbfilter (7; 17; 27) eine maximale Durchlässigkeit von 80% oder mehr und eine minimale Durchlässigkeit von 20% bis 50% hat,
**dadurch gekennzeichnet**, das sie weiter einen oder eine Mehrzahl von Retardierungsfilmen (12) aufweist, die zwischen dem Polarisationsfilm (11) und dem zweiten Substrat vorgesehen sind; und
wobei der Farbfilter aus einem Farbresist gefertigt ist, der 5% bis 20% Pigment in einem Photoresist enthält und eine Dicke von 0.5 µm bis 2.0 µm aufweist.

2. Farb-Flüssigkristallanzeigevorrichtung vom Reflexionstyp nach Anspruch 1, wobei der Retardierungsfilm (12) Bedingungen nx > nz >ny genügt, wobei nx der Brechungsindex in einer Dehnungsrichtung des Retardierungsfilms ist, ny der Brechungsindex in einer Richtung senkrecht zu der Dehnungsrichtung ist, und nz der Brechungsindex in einer Dickenrichtung ist.

3. Farb-Flüssigkristallanzeigevorrichtung vom Reflexionstyp nach Anspruch 1, wobei ein Dreh-Retardierungsfilm (23) zwischen dem Polarisationsfilm (11) und dem zweiten Substrat (2) anstelle der Farb-Flüssigkristallanzeigevorrichtung (11) vorgesehen ist.

4. Farb-Flüssigkristallanzeigevorrichtung vom Reflexionstyp nach einem der Ansprüche 1 bis 3, wobei der Farbfilter (7; 17; 27) aus Rotfiltern (R), Grünfiltern (G) und Blaufiltern (B) besteht und die maximalen Durchlässigkeiten der Farbfilter in der Reihenfolge von Blaufilter > Grünfilter > Rotfilter sind.

5. Farb-Flüssigkristallanzeigevorrichtung vom Reflexionstyp nach einem der Ansprüche 1 bis 3, wobei der Farbfilter (17) aus Rotfiltern (R), Grünfiltern (G) und Blaufilter (B) besteht und Abschirmungsschichten, die aus den Blaufiltern (B) gefertigt sind, in Zwischenräumen zwischen den Filtern einer jeden Farbe vorgesehen sind.

6. Farb-Flüssigkristallanzeigevorrichtung vom Reflexionstyp nach einem der Ansprüche 1 bis 5, wobei eine lichtabsorbierende Schicht vom durchscheinenden Typ (25) anstelle der lichtabsorbierenden Schicht (15) vorgesehen ist und ein Rücklicht (26) auf der anderen Seite der lichtabsorbierenden Schicht (25) vom durchscheinenden Typ bezogen auf den Polarisationsfilm (14) vom Reflexionstyp vorgesehen ist.

7. Farb-Flüssigkristallanzeigevorrichtung vom Reflexionstyp mit
einer STN-Flüssigkristallzelle (28) mit einem durchsichtigen ersten Substrat (1) mit ersten Elektroden (3), einem durchsichtigen zweiten Substrat (2) mit zweiten Elektroden (4), einem Farbfilter (7), der aus Filtern einer Mehrzahl von Farben besteht, der auf einem von dem ersten und dem zweiten Substrat (1, 2) vorgesehen ist, und einem nematischen Flüssigkristall (16), der unter einem Drehwinkel von 180° bis 270° ausgerichtet ist, der zwischen dem ersten und dem zweiten Substrat (1, 2) eingeschlossen ist;
einen Polarisationsfilm (11), der an der Außenseite des zweiten Substrat (2) vorgesehen ist, die die sichtbare Seite der STN-Flüssigkristallzelle (28) ist; und
einem oder einer Mehrzahl von Retardierungsfilmen (12), die zwischen dem Polarisationsfilm (11) und dem zweiten Substrat (2) vorgesehen sind; und
wobei die STN-Flüssigkristallzelle (28) mit einer Reflexionsschicht (29) versehen ist zum Reflektieren von Licht, welches durch den Farbfilter (7) auf dem ersten Substrat (1) hindurchgegangen ist, wobei
der Farbfilter (7) eine maximale Durchlässigkeit von 80% oder mehr und eine minimale Durchlässigkeit von 20% bis 50% aufweist, **dadurch gekennzeichnet, daß** die Diffusionsschicht (13) zwischen dem Polarisationsfilm (11) und dem zweiten Substrat (2) vorgesehen ist, und der Farbfilter aus einem Farbresist, der 5% bis 20% Pigmente in einem Photoresist enthält und eine Dicke von 0.5µm bis 2.0µm aufweist, gefertigt ist.

8. Farb-Flüssigkristallanzeigevorrichtung vom Reflexionstyp nach Anspruch 7, bei der Farbfilter (7) aus einem der drei Farbfilter von Rotfiltern, Grünfiltern und Blaufiltern oder aus drei Farbfiltern aus Cyanfiltern, Magentafiltern und Gelbfiltern besteht.

## Revendications

1. Dispositif d'affichage à cristaux liquides couleur du type à réflexion, comprenant :
une cellule de cristal liquide STN (20 ; 21 ; 22) comprenant un premier substrat transparent (1 ; 31) comportant des premières électrodes (3), un deuxième substrat transparent (2 ; 32) comportant des deuxièmes électrodes (4), un filtre couleur (7 ; 17 ; 27) consistant en des filtres d'une pluralité de couleurs prévus sur l'un desdits premier et deuxième substrats, et un cristal liquide nématique (6 ; 16) qui est aligné selon un angle d'hélice de 180° à 270°, scellé entre les premier et deuxième substrats ;
un film polarisant (11) prévu sur l'extérieur dudit deuxième substrat (2 ; 32) qui est le côté visible de ladite cellule de cristal liquide STN (20 ; 21 ; 22) ;
une couche de diffusion (13), un film polarisant du type à réflexion (14) et une couche d'absorption de lumière (15) qui sont prévus dans l'ordre sur l'extérieur dudit premier substrat, dans lequel :
ledit filtre couleur (7 ; 17 ; 27) a une transmittance maximale de 80 % ou plus et une transmittance minimale comprise entre 20 % et 50 %, **caractérisé en ce qu'**il comprend, de plus, un ou une pluralité de films de retard (12) prévus entre ledit film polarisant (11) et ledit deuxième substrat ; et dans lequel ledit filtre couleur est réalisé en une résine de couleur contenant 5 % à 20 % de pigment dans une résine photosensible et a une épaisseur comprise entre 0,5 µm et 2,0 µm.

2. Dispositif d'affichage à cristaux liquides couleur du type à réflexion selon la revendication 1, dans lequel ledit film de retard (12) satisfait aux conditions nx > nz > ny, où nx est l'indice de réfraction dans une direction d'allongement dudit film de retard, ny est l'indice de réfraction dans une direction orthogonale à la direction d'allongement et nz est l'indice de réfraction dans une direction d'épaisseur.

3. Dispositif d'affichage à cristaux liquides couleur du type à réflexion selon la revendication 1, dans lequel un film de retard en hélice (23) est prévu entre ledit film polarisant (11) et ledit deuxième substrat (2) à la place dudit film de retard (11).

4. Dispositif d'affichage à cristaux liquides couleur du type à réflexion, selon l'une des revendications 1 à 3, dans lequel ledit filtre couleur (7 ; 17 ; 27) consiste en des filtres rouges (R), des filtres verts (G) et des filtres bleus (B) et les transmittances maximales des filtres couleur sont dans l'ordre suivant : filtre bleu > filtre vert > filtre rouge.

5. Dispositif d'affichage à cristaux liquides couleur du type à réflexion selon l'une des revendications 1 à 3, dans lequel ledit filtre couleur (17) consiste en des filtres rouges (R), des filtres verts (G) et des filtres bleus (B) et des couches d'écran constituées des filtres bleus (B) sont prévues dans les espaces entre les filtres de chaque couleur.

6. Dispositif d'affichage à cristaux liquides couleur du type à réflexion selon l'une des revendications 1 à 5, dans lequel une couche d'absorption de lumière du type translucide (25) est prévue à la place de ladite couche d'absorption de lumière (15) et un rétroéclairage (26) est prévu sur l'autre côté de la couche d'absorption de lumière du type translucide (15) par rapport audit filtre polarisant du type à réflexion (14).

7. Dispositif d'affichage à cristaux liquides couleur du type à réflexion, comprenant :
une cellule de cristal liquide STN (28) comprenant un premier substrat transparent (1) comportant des premières électrodes (3), un deuxième substrat transparent (2) comportant des deuxièmes électrodes (4), un filtre couleur (7) constitués de filtres d'une pluralité de couleurs prévus sur l'un desdits premier et deuxième substrats (1, 2) et un cristal liquide nématique (16) qui est aligné selon un angle d'hélice de 180° à 270°, scellé entre lesdits premier et deuxième substrat (1, 2) ;
un film polarisant (11) prévu sur l'extérieur dudit deuxième substrat (2) qui est le côté visible de ladite cellule de cristal liquide STN (28) et
un ou une pluralité de films de retard (12) prévus entre ledit film polarisant (11) et ledit deuxième substrat (2), et
ladite cellule de cristal liquide STN (28) est pourvue d'une couche de réflexion (29) pour réfléchir la lumière qui est passée à travers ledit filtre couleur (7) sur ledit premier substrat (1), dans lequel :
ledit filtre couleur (7) a une transmittance maximale de 80 % ou plus et une transmittance minimale comprise entre 20 et 50 %, **caractérise en ce que** :
ladite couche de diffusion (13) est prévue entre ledit film polarisant (11) et ledit deuxième substrat (2), et
ledit filtre couleur est réalisé en une résine couleur contenant 5 % à 20 % de pigment dans une résine photosensible et a une épaisseur comprise entre 0,5 µm et 2,0 µm.

8. Dispositif d'affichage à cristaux liquides couleur du type à réflexion, selon la revendication 7, dans lequel ledit filtre couleur (7) consiste soit en des filtres de trois couleurs de filtres rouges, de filtres verts et de filtres bleus, soit en des filtres de trois couleurs de filtres cyan, de filtres magenta et de filtres jaunes.
